# EUROPÄISCHE PATENTSCHRIFT

(11) **EP 1 410 897 B1**
(45) Veröffentlichungstag und Bekanntmachung des Hinweises auf die Patenterteilung: **11.10.2006**
(21) Anmeldenummer: 03022718.5
(22) Anmeldetag: 09.10.2003
(51) Int. Cl.: B29C 65/18, B29C 65/78, B29D 31/00

(54) **Anlage zur Herstellung von Block- und Plattenelementen mit einer hexagonalen Wabenstruktur aus thermoplastischem Kunststoffmaterial**
Device for producing block elements and panels from a thermoplastic material with hexagonal honeycomb structure
Installation pour produire des éléments en blocs et en plaque en matériau thermoplastique avec structure hexagonale en nid d'abeille

(30) Priorität: 16.10.2002 DE 10248177
(43) Veröffentlichungstag der Anmeldung: 21.04.2004
(73) Patentinhaber: WT Wickeltechnik GmbH, 51674 Wiehl (DE)
(72) Erfinder: Berzbach, Dietmar, 51588 Nümbrecht (DE)
(74) Vertreter: Kayser, Martin

(56) Entgegenhaltungen:
- CA-A- 2 355 548
- US-A1- 2002 092 603

## Beschreibung

Wabenwerkstoffe aus Kunststoff mit einer hexagonalen Zellenstruktur werden in steigendem Maße aufgrund ihres niedrigen Eigengewichts, der hohen Festigkeit und Steifigkeit sowie einer preiswerten Fertigungstechnologie auf unterschiedlichen Gebieten der Technik zum Beispiel im Maschinenbau, als Isoliermaterial in der Kühltechnik, im Schienen- und Straßenverkehr zum Beispiel bei Aufbauten von Lastkraftwagen, im Gerüstbau, in der Luft- und Raumfahrtindustrie, für Hochleistungssportgeräte sowie beim Bau von Rennfahrzeugen und Hochsee-Rennjachten eingesetzt. Wabenwerkstoffe bieten hochtechnologischen Maschinen die nötige Sicherheit und Funktionalität, sparen Gewicht bei Flugzeugrümpfen und Raumfähren, geben Tragflächen und Rotorblättern die richtige Elastizität, ermöglichen Hochseejachten die erforderliche Steifigkeit und machen aufgrund des niedrigen Gewichts Rennfahrzeuge schneller. Wabenwerkstoffe aus Kunststoff besitzen eine weitaus größere Elastizität im Druckverhalten als Aluminium-Wabenwerkstoffe. Dies begründet ihren steigenden Einsatz als Fußbodenmaterial für Flugzeuge.

Die Erfindung betrifft eine Anlage zur Herstellung von Block- und Plattenelementen mit einer hexagonalen Wabenstruktur aus thermoplastischem Kunststoffmaterial, mit einer Schweißmaschine zum taktweisen Verschweißen von Bandmaterial zu einem expandierfähigen Hobestrang, einer Heizvorrichtung zum Erhitzen des Hobestrangs auf die Verformungstemperatur, einer Vorrichtung zum Recken des Hobestrangs sowie einer Schneidvorrichtung zum Abtrennen von Blöcken oder übereinander liegenden Platten von dem Hobestrang, wobei die Schweißmaschine mit einer Haltevorrichtung für die miteinander zu verschweißenden Bandabschnitte und einer Heizvorrichtung ausgestattet ist, die in Reihe nebeneinander angeordnete und zusammen hin und her verschiebbare Heizelemente zum streifenförmigen Erhitzen der zugeförderten Bandabschnitte auf die Schweißtemperatur des Bandmaterials aufweist, wobei nach einem Schweißtakt durch eine entgegengesetzte Verschiebung der Heizvorrichtung in jedem Bandabschnitt, der in ein Magazin gefördert wird, Schweißstreifen mit einem bestimmten Versatz zu den Schweißstreifen des vorherigen Bandabschnitts erzeugt werden, und die Schweißmaschine ferner eine Andruckeinrichtung zum Verschweißen der Bandabschnitte zu einem Hobestrang aufweist.

Die DE 198 30 380 A1 beschreibt eine Anlage der gattungsgemäßen Art zur Herstellung von Wabenwerkstoffen, die aus einem Abschnittmagazin für die zu einem Hobestrang zu verarbeitenden Bandabschnitte, einem Rotor mit mehreren Bearbeitungsstationen, einem Fertigungstisch mit einem Durchlaufmagazin für den Hobestrang, Infrarotstrahlern zum Erhitzen des Hobestrangs, einem Expansionswalzenpaar zum Recken des Hobestrangs sowie einer Schneidvorrichtung zum Schneiden des Hobestrangs in einzelne Blöcke besteht. Der taktweise angetriebene Rotor trägt auf seinem Umfang gleichmäßig verteilt sechs Stationen, durch die jeweils ein Bandabschnitt transportiert, mit Schweißstreifen versehen und vor dem Durchlaufmagazin an den Hobestrang angedrückt wird. Jede Bearbeitungsstation des Rotors umfaßt einen radial verschiebbaren, balkenförmigen Träger für einen Bandabschnitt, eine vor dem Abschnittsträger verschiebbare Streifenheizeinrichtung und eine walzenartige Andruckeinrichtung. Die Streifenheizeinrichtungen sind von einer Bearbeitungsstation zur nächsten axial gegeneinander hin und her versetzt, so daß die im Hobestrang aufeinanderfolgenden Bandabschnitte mit entsprechend versetzten Schweißstreifen versehen werden. Bei der Herstellung eines Hobestrangs wird während der taktweisen Drehung des Rotors die Streifenheizeinrichtung ausgefahren, so daß der aus dem Abschnittmagazin übernommene Bandabschnitt zwischen dem Abschnittsträger und den Heizelementen der kammartigen Heizeinrichtung liegt, wobei der Abschnittsträger in einer von der Streifenheizeinrichtung zurückgefahrenen Position steht. Sobald die Bearbeitungsstation nach drei Takten vor dem Durchlaufmagazin steht, werden der Abschnittsträger mit dem anzuschweißenden Bandabschnitt und der hin und her verschiebbare Fertigungstisch so weit aufeinander zu bewegt, daß sie von der kammförmigen Streifenheizeinrichtung kontaktiert werden können. Anschließend wird die Streifenheizeinrichtung zwischen dem Bandabschnitt auf dem Abschnittsträger und dem Hobestrang zurückgezogen, wobei durch Kontaktierung die Schweißstreifen auf den einander gegenüberliegenden Flächen des Bandabschnitts und des Hobestrangs erzeugt werden. Schließlich werden der Bandabschnittsträger mit dem anzuschweißenden Bandabschnitt und das Durchlaufmagazin mit dem Hobestrang weiter aufeinander zu bewegt, bis die Schweißstreifen aufeinandertreffen. Anschließend fahren der Abschnittsträger und das Durchlaufmagazin wieder auseinander, und der Rotor wird taktweise weitergedreht. Dabei fährt die Walze der Andruckeinrichtung der sich von dem Durchlaufmagazin entfernenden Bearbeitungsstation über den verschweißten Bandabschnitt, wodurch ein erneuter Andruck des Bandabschnitts gegen den Hobestrang und ein Vorschub des Blocks um die Dicke des Bandabschnitts bewirkt werden. Diese Betriebsabläufe wiederholen sich, sobald die nächste Bearbeitungsstation des Rotors vor dem Hobestrang steht.

Die Schweißmaschine dieser bekannten Anlage zur Herstellung von Wabenwerkstoffen weist folgende Nachteile auf:

Die Schweißmaschinenkonstruktion mit einem taktweise angetriebenen Rotor, auf dem eine Anzahl von Bearbeitungsstationen für die mit einem Hobestrang zu verschweißenden Bandabschnitte angeordert sind, ist technisch aufwendig. Im Betrieb besteht die Gefahr, daß an den Andruckwalzen der Bearbeitungsstationen des Rotors Materialreste hängen bleiben, so daß der Betrieb der Maschine gestört und diese automatisch abgeschaltet wird. Schließlich unterliegt die Maschine der Tendenz, daß beim Abrollen der Andruckwalze auf dem anzuschweißenden Bandabschnitt dieser auf dem Hobestrang verschoben und dadurch die Qualität des gefertigten Wabenwerkstoffs verschlechtert wird.

US-A-2002/092603 zeigt eine Anlage nach dem Oberbegriff des Anspruches 1.

Der Erfindung liegt die Aufgabe zugrunde, die Konstruktion der Schweißmaschine für Anlagen der gattungsgemäßen Art zur Herstellung von Wabenwerkstoffen im Hinblick auf eine technische Vereinfachung, eine höhere Betriebssicherheit und eine verbesserte Qualität der gefertigten Wabenwerkstoffe weiterzuentwickeln.

Diese Aufgabe wird erfindungsgemäß gelöst durch die nach dem Prinzip der Außenschweißung arbeitende Schweißmaschine nach Patentanspruch 1. Die Unteransprüche beinhalten vorteilhafte und zweckmäßige Weiterbildungen der Erfindung.

Die erfindungsgemäßen Schweißmaschinen ermöglichen die Herstellung von Wabenwerkstoffen mit einer ausgezeichneten Qualität und besitzen eine hohe Betriebssicherheit.

Die Erfindung ist nachstehend anhand schematischer Zeichnungsfiguren erläutert, die folgendes darstellen:
- Fig. 1: das Schema einer Anlage zur Herstellung von Block- und Plattenelementen mit einer hexagonalen Wabenstruktur,
- Fig. 2: eine Draufsicht einer nach dem Prinzip der Außenschweißung arbeitenden Schweißmaschine,
- Fig. 3: den Ausschnitt III der Figur 2 in vergrößerter Darstellung, die
- Fign. 4a und 4b: Draufsichten der Schweißmaschine mit den wechselnden Betriebsstellungen der Bauelemente bei zwei aufeinanderfolgenden Schweißtakten, die
- Fign. 5a bis 5d: den Bewegungsablauf der Bauelemente der Schweißmaschine bei einem Schweißtakt,
- Fig. 6: eine Draufsicht einer Längsschneidvorrichtung zum Schneiden des zu verarbeitenden Trägerbandes in Einzelbänder,
- Fig. 7: eine Seitenansicht der Längsschneidvorrichtung in vergrößerter Darstellung,
- Fig. 8: eine Draufsicht einer nach dem Prinzip der Innenschweißung arbeitenden Schweißmaschine,
- Fig. 9: den Ausschnitt IX der Figur 8 in vergrößerter Darstellung, die
- Fign. 10a und 10b: Draufsichten der Schweißmaschine mit den wechselnden Betriebsstellungen der Bauelemente bei zwei aufeinanderfolgenden Schweißtakten und die
- Fign. 11a bis 11d: den Bewegungsablauf der Bauelemente der Schweißmaschine bei einem Schweißtakt.

Bei der nachfolgenden Beschreibung der beiden Ausführungsformen der Schweißmaschine einer Anlage zur Herstellung von Wabenwerkstoffen sind gleiche oder ähnliche Bauteile durch gleiche Bezugszeichen gekennzeichnet.

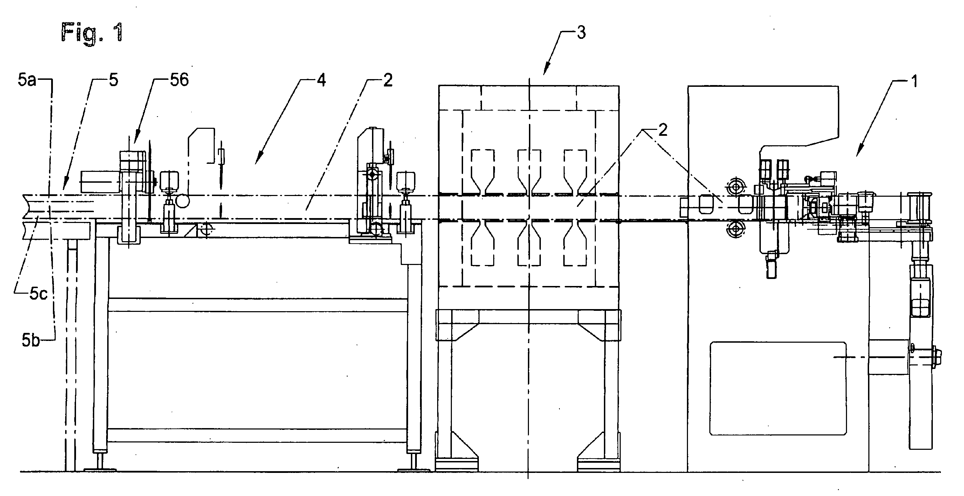

Die in Figur 1 dargestellte Anlage zur Herstellung von Block- und Plattenelementen mit einer hexagonalen Wabenstruktur aus thermoplastischem Kunststoff umfaßt eine Schweißmaschine 1 zum Verschweißen von Kunststoffbandabschnitten zu einem expandierfähigen Hobestrang 2, eine Heizvorrichtung 3 zum Erhitzen der Hobestränge 2 auf die Verformungstemperatur, eine Vorrichtung 4 zum Recken des Hobestrangs 2 sowie eine Schneidvorrichtung 56 zum Abtrennen von Blöcken 5 oder übereinander liegenden Platten 5a, 5b, 5c von dem Hobestrang 2.

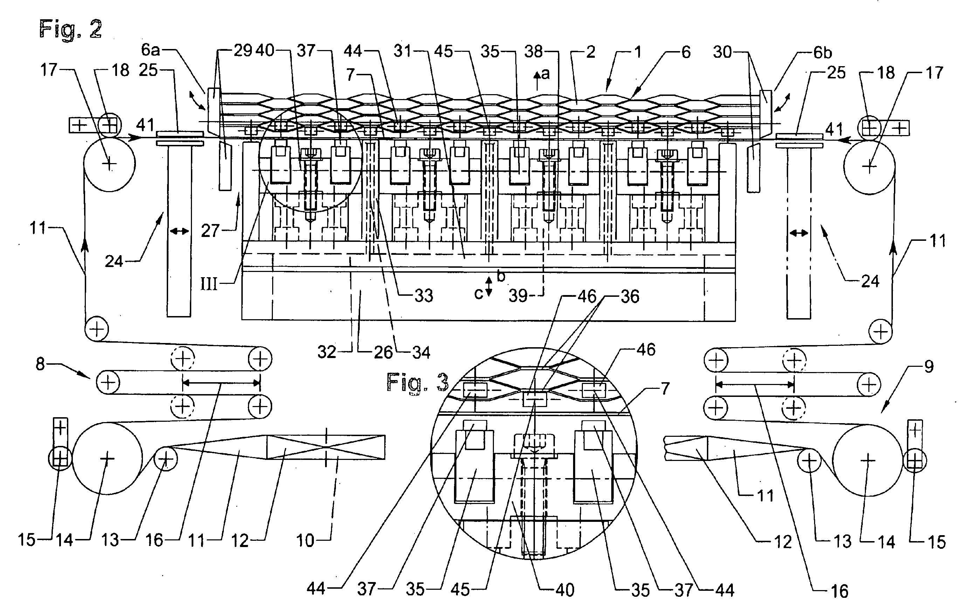

Die nach dem Prinzip der Außenschweißung arbeitende Schweißmaschine 1 nach den Figuren 2 bis 5 ist mit zwei an beiden Stirnseiten 6a, 6b eines Magazins 6 zur Aufnahme von Bandabschnitten 7 angeordneten Bandzuführeinrichtungen 8, 9 ausgestattet. Die Bandzuführeinrichtungen 8, 9 umfassen jeweils eine Abwickelrolle 10 für ein zu einem Bund 12 aufgewickeltes Trägerband 11, eine Umlenkrolle 13 zur Umlenkung des in einer Vertikalebene von der Abwickelrolle 10 ablaufenden Trägerbandes 11 um 90° in eine Horizontalebene, eine angetriebene Transportrolle 14 mit Andruckrolle 15 für das Trägerband 11, einen Trägerbandspeicher 16 sowie eine weitere Umlenkrolle 17 mit Andruckrolle 18 oder statt der Umlenkrolle 17 eine Längsschneidvorrichtung 19 für das Trägerband 11.

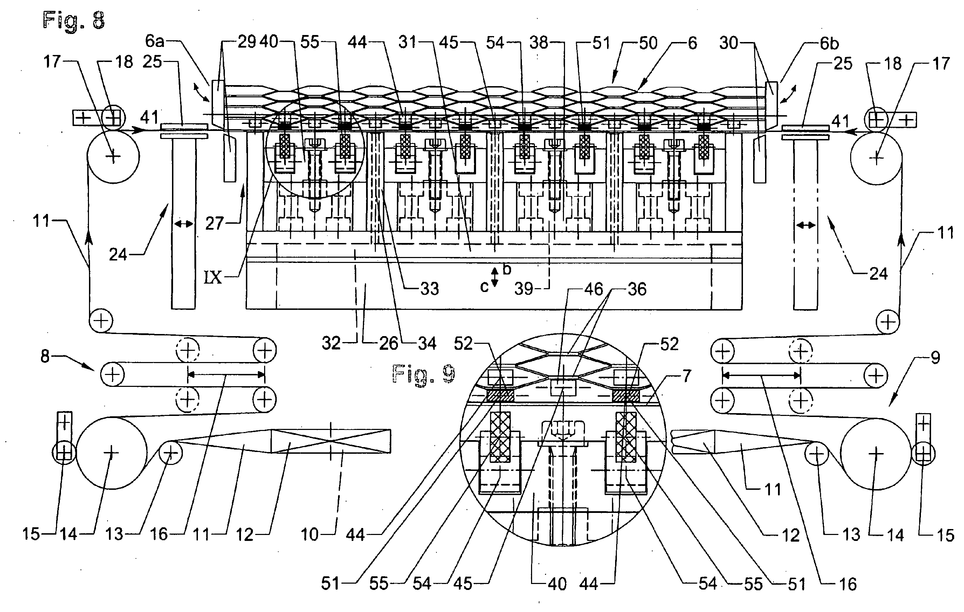

Die in den Figuren 6 und 7 dargestellte Längsschneidvorrichtung 19 zum Schneiden des Trägerbandes 11 in beispielsweise drei übereinanderliegende Einzelbänder 11a, 11b, 11c besteht aus einer Aufnahmewelle 20 für zwei Nutmesser 21 und einer Aufnahmewelle 22 für zwei mit den Nutmessern 21 zusammenwirkende Obermesserscheiben 23. Der Einsatz der Längsschneidvorrichtung 19 ermöglicht die Herstellung eines in übereinander liegende Lagen aufgeteilten Hobestrangs, die zu einem plattenförmigen Baumaterial mit einer Wabenstruktur gereckt werden.

Ein als Greifzange 25 ausgebildetes Förderelement 24 der Schweißmaschine 1 ist zum wechselweisen Einziehen von Bandabschnitten 7 über einen an einer Traverse 26 angebrachten Bandhalter 27 quer zur Förderrichtung a eines auf einem Auflagetisch 28 des Aufnahmemagazins 6 fortlaufend gefertigten Hobestrangs 2 bzw. Hobeblockstrangs parallel zum Bandhalter 27 zwischen den beiden Bandzuführeinrichtung 8, 9 verfahrbar.

An den beiden Stirnseiten 6a, 6b des Aufnahmemagazins 6 für die Bandabschnitte 7 sind ein- und ausschwenkbare Schneidvorrichtungen 29, 30 zum Abtrennen eines in die Schweißmaschine 1 eingezogenen Bandabschnitts 7 von dem Trägerband 11 angeordnet.

Der an der Traverse 26 befestigte Bandhalter 27 ist als Längsbalken 31 mit einer Vakuumkammer 32 ausgebildet, wobei der Längsbalken 31 Haltestege 33 mit an die Vakuumkammer 32 angeschlossenen Ansaugbohrungen 34 für die Bandabschnitte 7 aufweist.

An der Traverse 26 sind außer dem Bandhalter 27 in Reihe angeordnete Heizbalken, die jeweils aus einer Heizelementaufnahme 35, einschl. Kühlkammer, und aus einem Heizelement 37 bestehen, für eine taktweise erfolgende Verschweißung der in die Schweißmaschine 1 abwechselnd aus den beiden Bandzuführeinrichtungen 8, 9 eingezogenen Bandabschnitte 7 mit dem letzten Bandabschnitt 7 des Hobestrangs 2 vorgesehen.

Zum Andrücken eines an den Hobestrang 2 anzuschweißenden Bandabschnitts 7 sind zwischen den Haltestegen 33 an dem Längsbalken 31 des Bandhalters 27 pneumatische Druckzylinder 38 mit Stellkolben 39 für ein zwischen jeweils zwei Haltestegen 33 geführtes Querhaupt 40 angeordnet, an dem die Heizbalken gelenkig befestigt sind.

Die Schweißmaschine 1 ist ferner mit Stellantrieben ausgerüstet zum Verschieben der Traverse 26 mit dem Bandhalter 27 den Heizelementen 37 und den Heizelementaufnahmen 35 nach jedem Schweißtakt aus einer vorderen Betriebsposition quer zur Einziehebene 41-41 der Bandabschnitte 7 in Pfeilrichtung b in eine rückwärtige Warteposition zum Einziehen eines neuen Bandabschnitts 7 und zum anschließenden seitlichen Verschieben der Traverse 26 mit Bandhalter 27, Heizelementen 37 und Heizelementaufnahmen 35 mit bei jedem Schweißtakt wechselnder Richtung d, e um eine bestimmte Strecke 42 parallel zur Einziehebene 41-41 des anzuschweißenden Bandstreifens 7 und anschließenden Vorschieben der Traverse 26 mit Bandhalter 27, Heizelementen 37 und Heizelementaufnahmen 35 in Pfeilrichtung c in die Betriebsposition gegen den anzuschweißenden Bandabschnitt 7 und den letzten Bandabschnitt 7 des Hobestrangs 2 zum streifenförmigen Erhitzen der Bandabschnitte 7 auf Schweißtemperatur, wobei die Bandabschnitte 7 mittels der Heizelementaufnahmen 35 über die durch die Heizelemente 37 erzeugten Schweißstreifen 36 miteinander verschweißt werden.

Die Schweißmaschine 1 ist ferner mit zwei senkrecht zur Ebene 43-43 des Auflagetischs 28 des Aufnahmemagazins 6 für die Bandstreifen 7 anhebbaren und absenkbaren und parallel zu der Tischebene 43-43 in und entgegen der Förderrichtung a des Hobestrangs 2 verschiebbaren, kammartigen Bauteilen 44, 45 mit Eingreifzinken 46 mit einer Stützfunktion für die miteinander zu verschweißenden Bandabschnitte 7 im Bereich der Schweißstreifen 36 und einer Trennfunktion für die Bandabschnitte 7 zwischen den Schweißstreifen 36 ausgerüstet, wobei nach jedem Schweißtakt Stützfunktion und Trennfunktion der beiden kammartigen Bauteile 44, 45 wechseln.

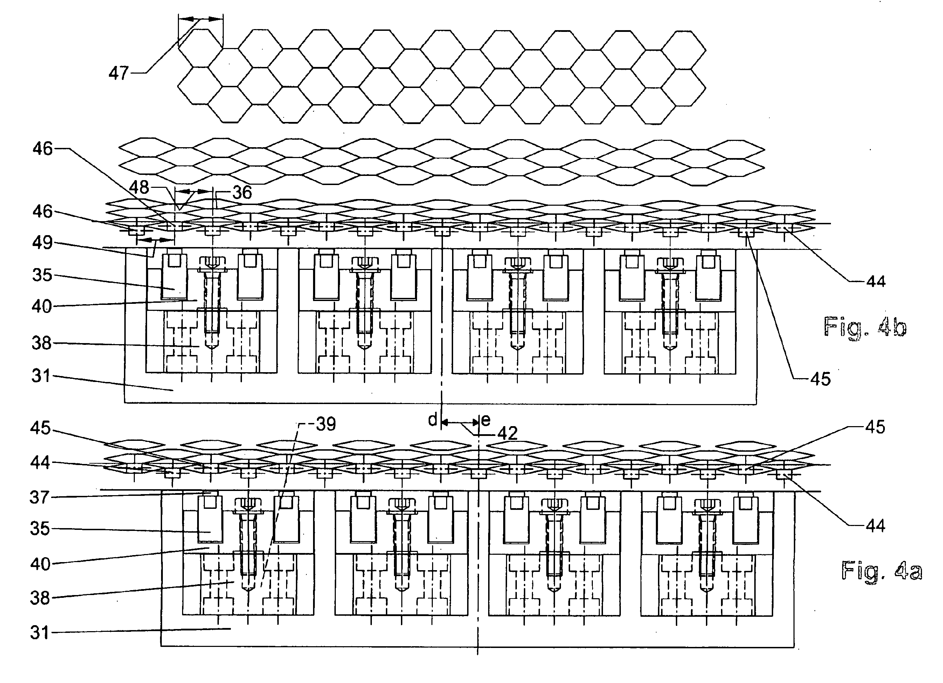

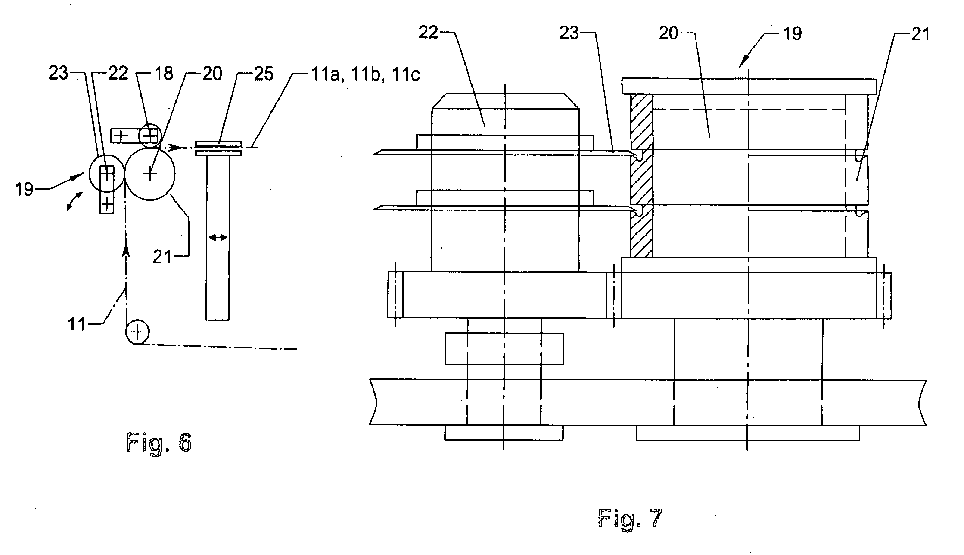

Die Figuren 4a und 4b zeigen die wechselnden Betriebsstellungen der Traverse 26 mit dem Bandhalter 27, den Heizelementen 37 und den Heizelementaufnahmen 35 sowie der kammartigen Bauteile 44, 45 bei zwei aufeinander folgenden Schweißtakten.

Zur Erzeugung der hexagonalen Wabenstruktur wird die Traverse 26 mit den Heizbalken von Schweißtakt zu Schweißtakt seitlich in entgegensetzter Richtung d, e um eine bestimmte Strecke 42 hin und her verschoben, so daß die Schweißstreifen 36 bzw. Schweißnähte von zwei aufeinander folgenden Bandabschnitten des fortlaufend gefertigten Strangs 2 entsprechend der seitlichen Verschiebung 42 der Heizbalken gegeneinander versetzt sind und sich durch den Versatz der Schweißstreifen 36 beim Recken des Hobestrangs 2 automatisch die hexagonale Wabenstruktur ergibt.

Bei den aufeinander folgenden Schweißtakten werden die kammartigen Bauteile 44, 45 mit den Eingreifzinken 46 derart verstellt, daß zum Beispiel bei dem in Figur 4a veranschaulichten Schweißtakt das Bauteil 44 die Stützfunktion und das Bauteil 45 die Trennfunktion für die beiden miteinander zu verschweißenden Bandabschnitte 7 ausübt und bei dem darauffolgenden Schweißtakt gemäß Figur 4b das Bauteil 44 die Trennfunktion und das Bauteil 45 die Stützfunktion übernimmt.

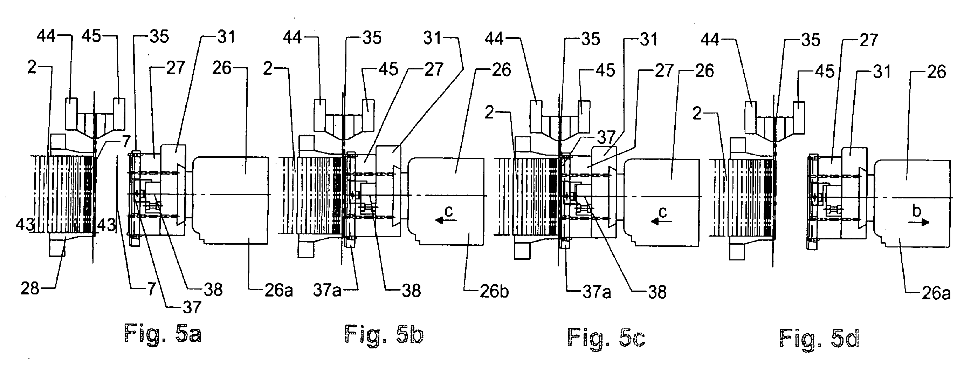

Entsprechend den Figuren 5a bis 5b wird bei einem Schweißtakt die in der hinteren Warteposition 26a gemäß Figur 5a stehende Traverse 26 mit den Heizelementen 37 und den in diese integrierten Heizelementaufnahmen 35 zunächst seitlich und dann in Pfeilrichtung c nach vorne in die Betriebsposition 26b verschoben. Dabei wird der in die Schweißmaschine 1 eingezogene Bandabschnitt 7 von dem Bandhalter 27 über dessen Saugbohrungen 34 angesaugt und gegen den letzten Bandabschnitt 7 des Hobestrangs 2 geschoben (Fig. 5b). Danach werden der letzte Bandabschnitt 7 des Hobestrangs 2 und der an diesem anzuschweißende Bandabschnitt 7 durch die in der Heizposition 37a befindlichen Heizelemente 37 mittels eines durch diese impulsartig strömenden Heizstroms streifenförmig auf die Schweißtemperatur erhitzt und die beiden Bandabschnitte 7 werden über die in diesen erzeugten Schweißstreifen 36 unter einem von den pneumatischen Druckzylindern 38 über die Heizelementaufnahmen 35 übertragenen, konstanten Anpreßdruck miteinander verschweißt (Fig. 5c). Danach wird die Traverse 26 mit dem Bandhalter 27 und den Heizelementen 37 mit den Heizelementaufnahmen 35 in die Warteposition 26a zurückbewegt (Fig. 5d).

Die Zellenbreite 47 der hexagonalen Wabenstruktur des gefertigten Block- bzw. Plattenmaterials 5; 5a, 5b, 5c wird bestimmt durch den Abstand 48 der Schweißstreifen 46 des aus den einzelnen Bandabschnitten 27 zusammengeschweißten Hobestrangs 2, der zu dem Block- bzw. Plattenmaterial gereckt wird.

Durch den Einbau eines Bandhalters 27 mit dem für eine bestimmte Zellen- bzw. Wabenbreite erforderlichen Abstand der Heizelemente 37 sowie kammartiger, wechselweise als Stütz- oder Trennelemente wirkender Bauteile 44, 45 mit einem dem Abstand 48 der Heizelemente 37 entsprechenden Abstand 49 der Eingreifzinken 46 kann die Schweißmaschine 1 auf die Fertigung von Wabenwerkstoffen mit der gewünschten Zellenbreite umgerüstet werden.

Die vorbeschriebenen Schweißmaschinen sind wegen der auftretenden hohen Temperaturen, die durch das zur Anwendung gelangende Impulsschweißverfahren bedingt sind, mit einer Wasserkühlung für die Heizelemente ausgerüstet.

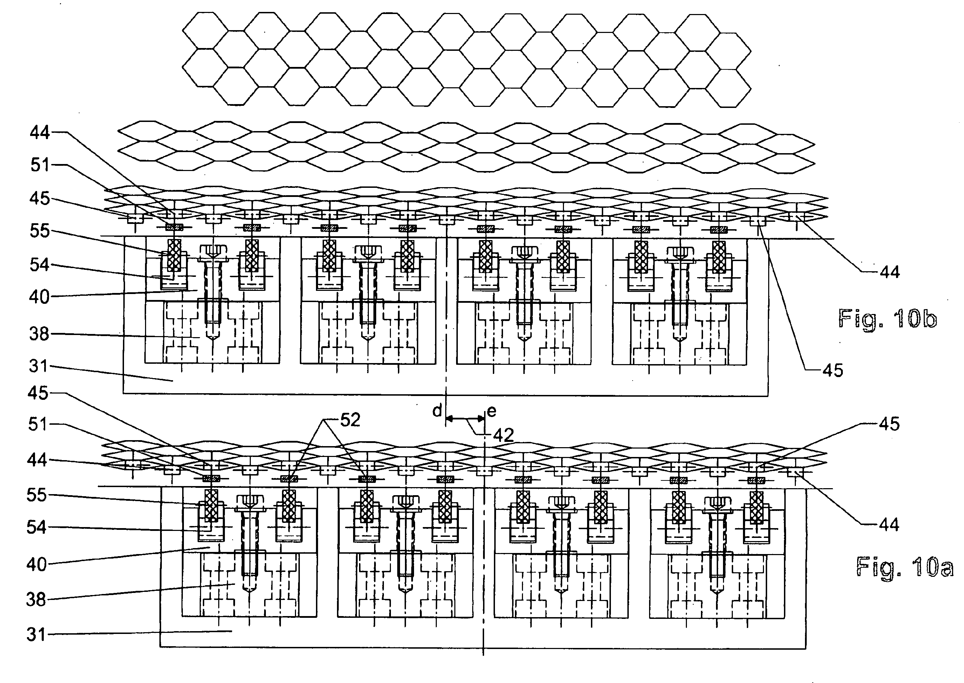

Die nach dem Prinzip der Innenschweißung arbeitende Schweißmaschine 50 gemäß den Figuren 8 bis 11 unterscheidet sich von der vorbeschriebenen Außenschweißmaschine durch die konstruktive Ausbildung der Heizvorrichtung zum streifenförmigen Erhitzen der Bandabschnitte, die zu einem Hobestrang verschweißt werden, sowie der Andruckleisten zum Verschweißen der Bandabschnitte.

An der Traverse 26 der Innenschweißmaschine 50 sind außer dem Bandhalter 27 eine kammartige Heizvorrichtung 51 mit in Reihe angeordneten, zinkenartigen Heizelementen 52 für eine taktweise erfolgende Verschweißung der in die Maschine 50 abwechselnd aus den beiden Bandzuführeinrichtungen 8, 9 eingezogenen Bandabschnitte 7 mit dem letzten Bandabschnitt 7 des Hobestrangs 2 und einem Stellantrieb zum Einschieben der Heizelemente 52 bei einem Schweißtakt von unten in Pfeilrichtung f zwischen den Hobestrang 2 und den jeweils an diesen anzuschweißenden Bandstreifen 7 und zum Herausziehen der Heizelemente 52 in Pfeilrichtung g aus dem Spalt 53 zwischen dem Hobestrang 2 und dem streifenförmig auf Schweißtemperatur erhitzten, angedrückten Bandstreifen 7 angebracht.

Zum Andrücken eines an den Hobestrang 2 anzuschweißenden Bandabschnitts 7 sind zwischen den Haltestegen 33 an dem Längsbalken 31 des Bandhalters 27 pneumatische Druckzylinder 38 mit Stellkolben 39 für ein jeweils zwischen zwei Haltestegen geführtes Querhaupt 40 angeordnet, an dem zwei Andruckleisten 54 mit Einsatzleisten 55 aus einem Spezialgummi angelenkt sind.

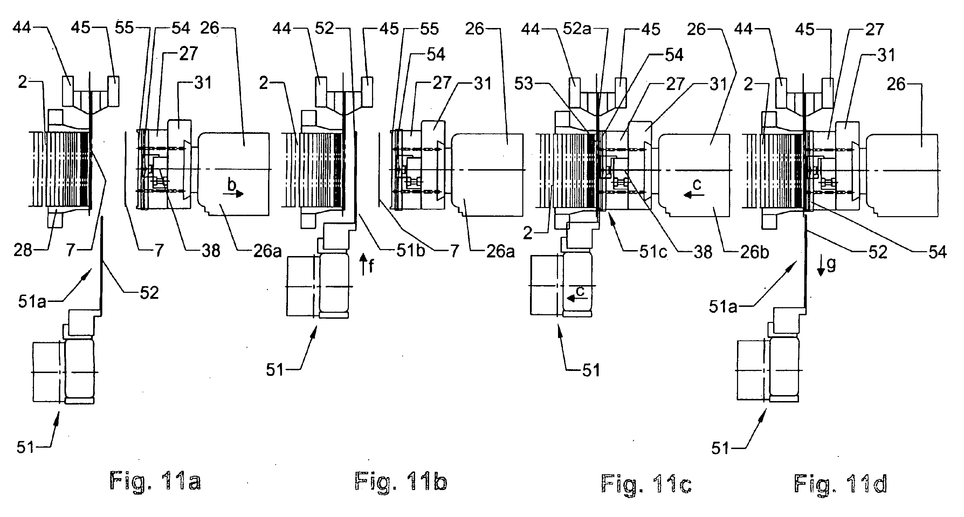

Entsprechend den Figuren 11a bis 11d wird bei einem Schweißtakt nach dem Einziehen eines Bandabschnitts 7 aus einer der beiden Bandzuführeinrichtungen 8, 9 mittels der Greifzange 25 in die Schweißmaschine 50 die in einer unteren Warteposition 51a stehende Heizvorrichtung 51 in Pfeilrichtung f in eine obere Zwischenposition 51b angehoben, so daß sich die Heizelemente 52 zwischen den Hobestrang 2 und den anzuschweißenden Bandabschnitt 7 schieben (Figuren 11a und 11b). Anschließend wird die in der hinteren Warteposition 26a gemäß den Figuren 11a, 11b stehende Traverse mit der Heizvorrichtung 51 und den Andruckleisten 54 zunächst seitlich und dann in Pfeilrichtung c nach vorne in die Betriebsposition 26b, 51c verschoben. Dabei wird der in die Schweißmaschine 50 eingezogene Bandabschnitt 7 von dem Bandhalter 27 über dessen Saugbohrungen 34 angesaugt und gegen den letzten Bandabschnitt 7 des Hobestrangs 2 geschoben (Fig. 11c). Danach werden der letzte Bandabschnitt 7 des Hobestrangs 2 und der an diesem anzuschweißende Bandabschnitt 7 durch die in der Heizposition 52a befindlichen Heizelemente 52 mittels eines Heizstroms streifenförmig auf die Schweißtemperatur erhitzt und anschließend werden die Heizelemente 52 durch eine Verschiebung der Heizvorrichtung 51 nach unten in Pfeilrichtung g in die Warteposition 52b aus dem Spalt 53 zwischen dem Hobestrang 2 und dem Bandabschnitt 7 herausgezogenen und die beiden Bandabschnitte 7 werden über die in diesen erzeugten Schweißstreifen 36 unter einem von den pneumatischen Druckzylindern 38 über die Andruckleisten 54 übertragenen, konstanten Anpreßdruck miteinander verschweißt (Fig. 11d). Schließlich wird die Traverse 26 mit dem Bandhalter 27, den Heizelementen 52 und den Andruckleisten 54 in die Warteposition 26a zurückbewegt (Fig. 11a).

Der Einsatz der nach dem Prinzip der Außenschweißung und der Innenschweißung arbeitenden Schweißmaschinen ist werkstoffabhängig. So können beispielsweise Vliesstoffe nur mit der Innenschweißmaschine verarbeitet werden.

Beide Schweißmaschinentypen bieten die Möglichkeit, expandierfähige Verbundwerkstoffe mit einer beidseitigen Beschichtung aus einem thermoplastischen Kunststoff zu verarbeiten.

## Patentansprüche

1. Anlage zur Herstellung von Block- und Plattenelementen mit einer hexagonalen Wabenstruktur aus thermoplastischem Kunststoffmaterial, mit einer Schweißmaschine zum taktweisen Verschweißen von Bandmaterial zu einem expandierfähigen Hobe-Materialstrang, einer Heizvorrichtung zum Erhitzen des Hobestrangs auf die Verformungstemperatur, einer Vorrichtung zum Recken des Hobestrangs und einer Schneidvorrichtung zum Abschneiden von block- oder plattenförmigem Baumaterial von dem Hobestrang, wobei die Schweißmaschine mit einer Haltevorrichtung für die miteinander zu verschweißenden Bandabschnitte und einer Heizvorrichtung ausgestattet Ist, die In Reihe nebenelnander angeordnete und zusammen hin und her verschiebbare Heizelemente zum streifenförmigen Erhitzen der zugeförderten Bandabschnitte auf die Schweißtemperatur des Bandmaterials aufweist, wobei nach einem Schweißtakt durch eine entgegengesetzte Verschiebung der Heizvorrichtung in jedem Bandabschnitt, der in ein Magazin gefördert wird, Schweißstreifen mit einem bestimmten Versatz zu den Schweißstreifen des vorherigen Bandabschnitts erzeugt werden, und die Schweißmaschine ferner eine Andruckeinrichtung zum Verschweißen der Bandabschnitte zu einem Hobestrang aufweist, aufweisend eine nach dem Prinzip der Außenschweißung arbeitende Schweißmaschine (1) mit zwei an beiden Stirnseiten (6a, 6b) des Magazins (6) zur Aufnahme der Bandabschnitte (7) angeordneten Bandzuführeinrichtungen (8, 9) und einem Förderelement (24), das zum wechselweisen Einziehen von Bandabschnitten (7) über einen Bandhalter (27) quer zur Förderrichtung (a) eines auf einem Auflagetisch (28) des Aufnahmemagazins (6) fortlaufend gefertigten Hobestrangs (2) parallel zum Bandhalter (27) zwischen den Bandzuführvorrichtungen (8, 9) verfahrbar ist, an den beiden Stirnseiten (6a, 6b) des Magazins (6) zur Aufnahme der Bandabschnitte (7) angeordnete Schneidvorrichtungen (29, 30) zum Abtrennen eines in die Maschine (1) eingezogenen Bandabschnitts (7) von dem Trägerband (11), ferner mit zwei senkrecht zur Ebene (43-43) des Auflagetisches (28) anhebbaren und absenkbaren und parallel zu der Tischebene (43-43) in und entgegen der Förderrichtung (a) des Hobestrangs (2) verschiebbaren, kammartigen Bauteilen (44, 45) mit Elngreifzinken (46) mit einer Stützfunktion für die miteinander zu verschweißenden Bandabschnitte (7) im Bereich der Schweißstreifen (36) und einer Trennfunktion für die Bandabschnitte (7) zwischen den Schweißstreifen (36), wobei nach jedem Schweißtakt Stützfunktion und Trennfunktion der beiden kammartigen Bauteile (45, 46) wechseln, **gekennzeichnet durch** eine Traverse (26), an der der Bandhalter (27) für den jeweils an den Hobestrang (2) anzuschweißenden Bandabschnitt (7), in Reihe angeordnete Heizelemente (37) für eine taktweise erfolgende Streifennahtverschweißung der in die Maschine (1) abwechselnd aus den beiden Bandzuführeinrichtungen (8, 9) eingezogenen Bandabschnitts (7) mit dem letzten Bandabschnitt (7) des Hobestrangs (2) und in die Heizelemente (37) integrierte Heizelementaufnahmcn (35) für den jeweils anzuschweißenden Bandabschnitt (7) angebracht sind, mit Stellantrieben zum Verschieben der Traverse (26) mit dem Bandhalter (27), den Heizelementen (37) und den Heizelementaufnahmen (35) nach jedem Schweißtakt aus einer vorderen Betriebsposition (26b) quer (Pfeilrichtung b) zur Enziehebene (41-41) der Bandabschnitte (7) in eine rückwärtige Warteposition (26a) zum Einziehen eines neuen Bandabschnittes (7) und zum anschließenden seitlichen Verschieben der Traverse (26) mit Bandhalter (27), Heizelementen (37) und Heizelementaufnahmen (35) mit bei jedem Schweißtakt wechselnder Richtung (d, e) um eine bestimmte Strecke (42) parallel zur Einziehebene (41-41) des anzuschweißenden Bandstreifens (7) und Verschieben (Pfeilrichtung c) der Traverse (26) mit Bandhalter (27), Heizelementen (37) und Heizelementaufnahmen (35) in die Betriebsposition (26b) gegen den anzuschweißenden Bandabschnitt (7) und den letzten Bandabschnitt (7) des Hobestrangs (2) zum streifenförmigen Erhitzen der Bandschnittc (7) auf Schweißtemperatur sowie mit auf der Traverse (26) angeordneten Stellantrieben (38, 39) für die Heizelementaufnahmen (35) zum Andrücken des an dem Hobestrang (2) mittels der erzeugten Schweißstreifen (36) anzuschweißenden Bandabschnitts (7).

2. Anlage nach Anspruch 1, **dadurch gekennzeichnet, dass** die Bandzuführeinrichtungen (8, 9) eine Abwickelrolle (10) für ein zu einem Bund (12) aufgewickeltes Trägerband (11), eine Umlenkrolle (13), eine angetriebene Transportrolle (14) mit Andruckrolle (15) für das Trägerband (11), einen Trägerbandspeicher (16) sowie eine weitere Umlenkrolle (17) mit Andruckrolle (18) oder eine Längsschneidvorrichtung (19) für das Trägerband (11)umfassen.

3. Anlage nach Anspruch 1 oder 2, **dadurch gekennzeichnet, dass** das Förderelement (24) zum Einziehen der Bandabschnitte (7) aus einer Greifzange (25) besteht.

4. Anlage nach einem der Ansprüche 1 bis 3, **dadurch gekennzeichnet, dass** der Bandhalter (27) als Längsbalken (31) mit einer Vakuumkammer (32) ausgebildet ist, der Haltestege (33) mit an die Vakuumkammer (32) angeschlossenen Ansaugbohrungen (34) für die Bandabschnitte (7) aufweist.

5. Anlage nach Anspruch 4, **gekennzeichnet durch** zwischen den Haltestegen (33) an dem Längsbalken (1) des Bandhalters (27) angeordnete Druckzylinder (38) mit Stellkolben (39) für ein zwischen jeweils zwei Haltestegen (33) geführtes Querhaupt (40), an dem bei der Außenschweißmaschine (1) ein oder mehrere Heizelemente (37) mit integrierten Heizelementaufnahmen (35) und bei der Innenschweißmaschine (50) eine oder mehrere Andruckleisten (54) für die zu einem Hobestrang (2) zu verschweißenden Bandabschnitte (7) gelenkig befestigt ist bzw. sind.

6. Anlage nach Anspruch 5, **dadurch gekennzeichnet, dass** die Innenschweißmaschine (50) Andruckleisten (54) aus Metall mit Einsatzleisten (55) aus einem Spezialgummi aufweist.

## Claims

1. A plant for producing block and panel elements with a hexagonal honeycomb structure from thermoplastic plastic material, with a welding machine for incrementally welding strip material to form an expandable skein of material, a heating device for heating this skein to a working temperature, with a device for stretching the skein and a cutting device for cutting off block or panel construction material from the skein, the welding machine having a holding device for the strip sections that are to be welded to one another, and a heating device that has a row of heating elements that can be moved back and form in order to strip heat the sections that are fed into the welding temperature of the strip material; strip welds that are offset relative to the strip welds of the previous strip section are made after a welding cycle, by shifting the heating device-in opposite directions―in each strip section that is delivered to a magazine, the welding machine also having a press device for welding the strip sections together to form a skein, comprising a welding machine (1) that operates on the principle of external welding, with two strip feed devices (8, 9) that are arranged on the two face ends (6a, 6b) of the magazine to hold the strip sections (7) and a feed element (24) that can be moved over a strip holder (27), transversely to the feed direction (a) of a skein (2) that is constantly being assembled on a supporting table (28) of the magazine (6), parallel to the strip holder (27), between the strip feed devices (8, 9), cutting devices (29, 30) for separating a strip section (7) that has been drawn into the machine (1) from the carrier strip (11), and in addition with two comb-like parts (44, 45) with catch teeth (46), which can be raised and lowered perpendicularly to the plane (43-43) of the table (28), in and against the feed direction (a) of the skein (2), with a supporting function for the strip sections (7) that are to be welded to one another in the area of the strip welds (36), and a separating function for the strip sections (7) between the strip welds (36), the two comb-like parts (45, 46) alternating the supporting function and the separating function after each welding cycle, **characterized by** a crosshead (26) to which the strip holder (27) for the strip section (7) that is to be welded on to the skein (2), a row of heating elements (37) for the incremental strip welding of the strip section (7) that is drawn in alternation into the machine (1) from the two strip feed devices (8,9) to the last strip section (7) of the skein (2), and heating element receptacles (35) that are integrated into the heating elements (37), with adjusting drives for shifting the crosshead (26), together with the strip holder (27), the heating elements (37), and the heating element receptacles (35) being moved from a front operating position (26b) transversely (direction b indicated by the arrow) to the intake plane (41-41) of the strip sections (7), into a rear holding position (26a) for drawing in a new strip section (7), and for the subsequent lateral shifting of the crosshead (26), with the strip holder (27), the heating elements (37), and the heating element receptacles (35) by a specific distance (42) in a direction (d, e) that alternates after each welding cycle, parallel to the intake plane (41-41) of the strip section (7) that is to be welded on, and for shifting (direction c indicated by the arrow) the crosshead (26), together with the band holder (27), heating elements (37), and the heating element receptacles (35) into the operating position (26b) against the strip section (7) that is to be welded on, and the last strip section (7) of the skein (2) for strip heating the strip section (7) to working temperature, as well as with adjusting drives (38, 39) that are arranged on the crosshead (26) for the heating element receptacles (35) for pressing the band section (7) that is to be welded on to the skein (2) by means of the strip welds (36) that have been formed.

2. Plant as defined in Claim I, **characterized in that** the strip feed devices (8,9) incorporate a supply roll (10) for a carrier strip (11) that is wound into a skein (12), a guide roller (13), a driven transport roller (14) with a pressure roller (15) for the carrier strip (11), a strip store (16), as well as an additional guide roller (17) with a pressure roller (18) or a longitudinal cutter (19) for the carrier strip (11).

3. Plant as defined in claim 1 or 2, **characterized in that** the conveyor element (24) for drawing in the strip sections (7) consists of a gripper (25).

4. Plant as defined in one of the Claims I to 3, **characterized in that** the strip holder (27) is in the form of a longitudinal beam (31) with a vacuum chamber (32) that has holding bars (33) with suction bores (34), which are connected to the vacuum chamber (32), for the strip sections (7).

5. Plant as defined in Claim 4, **characterized in that** between the holding bars (33) on the longitudinal beam (31) of the strip holder (27) there are pressure cylinders (38) with adjusting pistons (39) for a crosshead (40) to which is articulated-in the case of the external welding machine (1) -one or a plurality of heating elements (37) with integrated heating element receptacles (35) and-in the case of the internal welding machine (50) -one or a plurality of pressure rails (54) for the band sections (7) that are to be welded together to form a skein (2).

6. Plant as defined in Claim 5, **characterized in that** the internal welding machine (50) has pressure rails (54) that are of metal and that incorporate insert rails (55) that are of special rubber.

## Revendications

1. Installation pour la réalisation d'éléments en forme de bloc ou de panneau avec une structure alvéolaire hexagonale en matière synthétique thermoplastique, avec une machine de soudage par cycle de feuillards dans le but d'en former un écheveau de matière expansible, un dispositif de chauffe pour porter l'écheveau à la température de mise en forme, un dispositif pour étirer l'écheveau et un dispositif de coupe pour couper de l'écheveau du matériau de construction en forme de bloc ou de panneau, la machine de soudage étant équipée d'un dispositif de retenue pour les portions de feuillard destinées à être soudées ensemble et d'un dispositif de chauffe comportant des éléments chauffants disposés côte à côte et animés d'un mouvement alternatif pour porter par bandes les portions de feuillard acheminées à la température de soudage des feuillards, des bandes de soudage étant réalisées avec un certain décalage par rapport aux bandes de soudage de la portion de feuillard précédente après un cycle de soudage par le déplacement du dispositif de chauffe en sens inverse dans chaque portion de feuillard acheminée dans un magasin, la machine de soudage comportant par ailleurs un organe presseur destiné à souder ensemble les portions de feuillard pour en former un écheveau, comportant une machine de soudage (1) fonctionnant selon le principe du soudage extérieur avec deux dispositifs d'amenée de feuillard (8, 9) disposés sur les deux faces d'extrémité (6a, 6b) du magasin (6) et destinés à recevoir les portions de feuillard (7) et avec un élément d'introduction (24) qui est mobile en déplacement parallèlement à l'organe de retenue (27) du feuillard entre les dispositifs d'amenée de feuillard (8, 9) pour introduire en alternance des portions de feuillard (7) par l'intermédiaire d'un organe de retenue (27) du feuillard en travers de la direction de transport (a) d'un écheveau (2) confectionné en continu sur une table portante (28) du magasin de réception (6), des dispositifs de coupe (29, 30) destinés à sectionner une portion de feuillard (7) introduite dans la machine (1) de la bande support (11) et disposés sur les deux faces d'extrémité (6a, 6b) du magasin (6) destiné à recevoir les portions de feuillard (7), ainsi que deux pièces (44, 45) en forme de peigne mobiles en déplacement dans la direction de transport (a) de l'écheveau ainsi qu'en sens inverse parallèlement au plan (43-43) de la table portante (28) et aptes à être levées et abaissées perpendiculairement au plan (43-43) de la table, ces pièces étant munies de dents d'engagement (46) ayant une fonction support pour les portions de feuillard (7) destinées à être soudées ensemble dans la région des bandes de soudage (36) et une fonction de séparation des portions de feuillard (7) entre les bandes de soudage (36), la fonction support et la fonction de séparation des deux pièces (45, 46) en forme de peigne alternant à chaque cycle de soudage, **caractérisée par** une traverse (26) à laquelle sont fixés l'organe de retenue (27) de la portion de feuillard (7) respective destinée à être soudée à l'écheveau (2), des éléments chauffants (37) associés en série pour le soudage en bande par cycles des portions de feuillard (7) introduites alternativement dans la machine (1) par les deux dispositifs d'amenée de feuillard (8, 9) avec la dernière portion de feuillard (7) de l'écheveau (2) et des logements (35) pour les éléments chauffants (37) intégrés dans ceux-ci et destinés à chauffer la portion de feuillard (7) respective qu'il y a lieu de souder, avec des organes moteurs destinés à déplacer la traverse (26) avec l'organe de retenue (27) du feuillard, les éléments chauffants (37) et les logements (35) pour les éléments chauffants après chaque cycle de soudage depuis une position de fonctionnement antérieure (26b) en travers (dans le sens de la flèche b) du plan d'introduction (41-41) des portions de feuillard (7) vers une position d'attente (26a) arrière pour introduire une nouvelle portion de feuillard (7) et pour ensuite provoquer le déplacement latéral de la traverse (26) avec l'organe de retenue (27) du feuillard, les éléments chauffants (37) et les logements (35) pour les éléments chauffants d'une certaine distance (42) dans une direction (d, e) alternant à chaque cycle de soudage parallèlement au plan d'introduction (41-41) de la bande de feuillard (7) qu'il y a lieu de souder et pour déplacer (dans le sens de la flèche c) la traverse (26) avec l'organe de retenue (27) du feuillard, les éléments chauffants (37) et les logements (35) pour les éléments chauffants dans la position de fonctionnement (26b) contre la portion de feuillard (7) qu'il y a lieu de souder et contre la dernière portion de feuillard (7) de l'écheveau (2) pour porter par bandes les portions de feuillard (7) à la température de soudage ainsi qu'avec des organes moteur (38, 39) pour les logements (35) pour les éléments chauffants disposés sur la traverse (26) et destinés à plaquer contre l'écheveau (2) la portion de feuillard (7) qu'il y a lieu de souder à celui-ci moyennant les bandes de soudage (36) réalisées.

2. Installation selon la revendication 1, **caractérisée en ce que** les dispositifs d'amenée de feuillard (8, 9) comprennent un rouleau débiteur (10) pour une bande support (11) enroulée en botte (12), une poulie de renvoi (13), un rouleau de transport (14) avec rouleau presseur (15) pour la bande support (11), un réservoir de bande support (16) ainsi qu'une poulie de renvoi (17) supplémentaire avec rouleau presseur (18) ou avec dispositif de coupe longitudinale (19) de la bande support (11).

3. Installation selon la revendication 1 ou 2, **caractérisée en ce que** l'élément d'introduction (24) des portions de feuillard (7) est constitué d'une pince de préhension (25).

4. Installation selon l'une quelconque des revendications 1 à 3, **caractérisée en ce que** l'organe de retenue (27) du feuillard est réalisé sous forme de longeron (31) avec une chambre sous vide (32) qui comporte des entretoises de retenue (33) avec des trous d'aspiration (34) des portions de feuillard (7) raccordés à la chambre sous vide (32).

5. Installation selon la revendication 4, **caractérisée par** des cylindres de pression (38) disposés entre les entretoises de retenue (33) sur le longeron (31) de l'organe de retenue (27) du feuillard et comportant des pistons de commande (39) pour une tête transversale (40) guidée entre deux entretoises de retenue (33) respectives et sur laquelle sont articulés dans le cas d'une machine (1) de soudage extérieur un ou plusieurs éléments chauffants (37) avec logements (35) pour les éléments chauffants intégrés et dans le cas d'une machine de soudage intérieur (50) une ou plusieurs baguettes de pression (54) destinées à plaquer les portions de feuillard (7) qu'il y a lieu de souder ensemble pour en former un écheveau (2).

6. Installation selon la revendication 5, **caractérisée en ce que** la machine de soudage intérieur (50) comporte des baguettes de pression (54) en métal avec des baguettes d'insertion (55) en caoutchouc spécial.
